# FASCICULE DE BREVET EUROPEEN

(11) **EP 2 216 451 B1**
(45) Date de publication et mention de la délivrance du brevet: **16.11.2011**
(21) Numéro de dépôt: 10290049.5
(22) Date de dépôt: 03.02.2010
(51) Int. Cl.: E04B 1/24, E04H 1/02, E04H 1/12

(54) **Construction en bois pourvue de moyens de rattrapage niveau**
Holzkonstruktion mit Mittel zur Niveauregulierung
Wooden building with leveling means

(30) Priorité: 05.02.2009 FR 0900474
(43) Date de publication de la demande: 11.08.2010
(73) Titulaire: Scarpa, Sylvestre, 07600 Asperjoc (FR)
(72) Inventeur: Scarpa, Sylvestre, 07600 Asperjoc (FR)
(74) Mandataire: Gosse, Michel

(56) Documents cités:
- DE-U1- 8 510 565
- DE-U1- 9 208 144
- DE-U1-202007 016 886
- US-A- 1 459 761

## Description

### DOMAINE DE L'INVENTION

L'invention concerne une construction en bois à usage d'habitation, de bureau ou industriel, destinée à être installée sur un terrain à niveaux variables comprenant des moyens aptes à rattraper les différences de niveaux et reposant sur des plots de fondation.

### ARRIERE PLAN TECHNOLOGIQUE

Les constructions en bois connues sont essentiellement des types suivants :
- un premier type qui met en oeuvre des panneaux porteurs d'un seul tenant qui sont assemblés aux 4 coins de la construction et qui reposent obligatoirement sur une dalle: outre le fait qu'ils nécessitent la réalisation d'une dalle, leur manipulation et leur transport nécessitent des engins spéciaux (grues, véhicules nécessitant un convoi exceptionnel);
- un deuxième type qui met en oeuvre une structure portante constituée de poteaux et de poutres : les panneaux ne servent qu'au remplissage de cette structure et une telle construction nécessite l'exécution de contreventements ;
- un troisième type, tel que décrit dans les documents DE202007016886 et US1459761, qui mettent en oeuvre des poteaux d'angles et intermédiaires, des poutres inférieures et supérieures et des éléments de panneaux maintenus par lesdits poteaux et lesdites poutres.

Les moyens connus destinés à rattraper les différences de niveaux, sont essentiellement décrits dans les documents DE202007016886, DE8510565 et DE9208144.

### RESUME DE L'INVENTION

L'invention s'applique à une construction en bois à usage d'habitation, de bureau ou industriel, destinée à être installée sur un terrain à niveaux variables et comprenant des moyens, aptes à rattraper les différences de niveaux, reposant sur des plots de fondation ; ladite construction étant du type « manutransportable» utilisant des sous-ensembles en bois préfabriqués, juxtaposables et constituée de poteaux d'angles et intermédiaires, de poutres inférieures et supérieures et d'éléments de panneaux maintenus par lesdits poteaux et lesdites poutres.

Elle se **caractérise en ce que** les moyens de rattrapage de niveaux sont constitués, chacun :
- d'une boîte métallique, ouverte en partie supérieure, destinée à être fixée sur chaque plot à la verticale de chaque poteau d'angle et intermédiaire ;
- d'une tige filetée métallique, fixée centrée dans le fond de ladite boîte, traversant la poutre inférieure correspondante et pénétrant dans une cavité aménagée à la base du poteau correspondant ;
- d'une plaque métallique, associée à un écrou en prise avec la tige filetée, plaquée sous la poutre inférieure correspondante, destinée à soutenir la construction et à permettre un réglage fin de rattrapage final de niveau.

Elle se caractérise également en ce que chacun de éléments de boîte, de tige filetée, de plaque et d'écrou sont dimensionnés en fonction des caractéristiques mécaniques et dimensionnelles de la construction et des différences de niveau existant entre les divers plots de fondation.

Le problème que la présente invention se propose de résoudre peut donc être considéré comme consistant à ajuster le niveau de la construction de manière plus fiable et indépendante de la condition du sol.

Selon des particularités de réalisation de l'invention:
- chaque boîte métallique comporte un élément de poutre en bois, traversé par la tige filetée, reposant sur une membrane souple étanche placée dans le fond de celle-ci et des trous latéraux destinés au passage de tiges aptes à maintenir ledit élément de poutre par rapport à la boîte;
- chaque poutre inférieure comporte, outre les rainures longitudinales dans lesquelles les éléments de panneaux s'emboîtent, des encoches transversales au fond desquelles s'appuient respectivement, la base des poteaux correspondants et les plaques métalliques par l'intermédiaire de membranes souples étanches placées dans le fond desdites encoches ;
- les poteaux d'angles et intermédiaires comportent des rainures longitudinales aptes à loger les bords verticaux de deux éléments de panneaux adjacents ;
- les poutres inférieures et supérieures comportent des rainures longitudinales aptes à loger les bords horizontaux des éléments de panneaux.

Un élément de panneau standard peut être réalisé par la superposition d'un premier module constitué d'au moins trois lames croisées possédant des parois latérales pourvues d'angles saillants ou rentrants et d'un deuxième module constitué d'un panneau pourvu, d'un côté, d'une bande sortante et, de l'autre côté, d'une encoche apte à loger la bande sortante du panneau adjacent complémentaire.

Selon une variante possible de ladite réalisation, un élément isolant peut être inséré entre les lames croisées et l'élément de panneau pourvu de la lame sortante. L'invention porte également :
- sur des éléments de panneaux chauffants pouvant être utilisés pour réaliser des murs, des planchers ou des toitures ;
- sur des éléments de panneaux récupérateurs d'énergie solaire pouvant être utilisés pour réaliser des murs ou des toitures.

Les constructions en bois présentent les avantages inhérents à leur légèreté (sept fois plus légères que les constructions en béton) et plus particulièrement vis à vis du dimensionnement des structures sous-jacentes.

Les éléments préfabriqués induisent également des caractéristiques de rapidité, de précision et d'économie et favorisent l'autoconstrution.

Les fondations en plots présentent, outre l'avantage inhérent au coût, celui lié au fait que les eaux peuvent circuler sans exercer des pressions sur la structure.

Une telle conception convient également pour terrains meubles, inondables ou recouverts d'eau.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

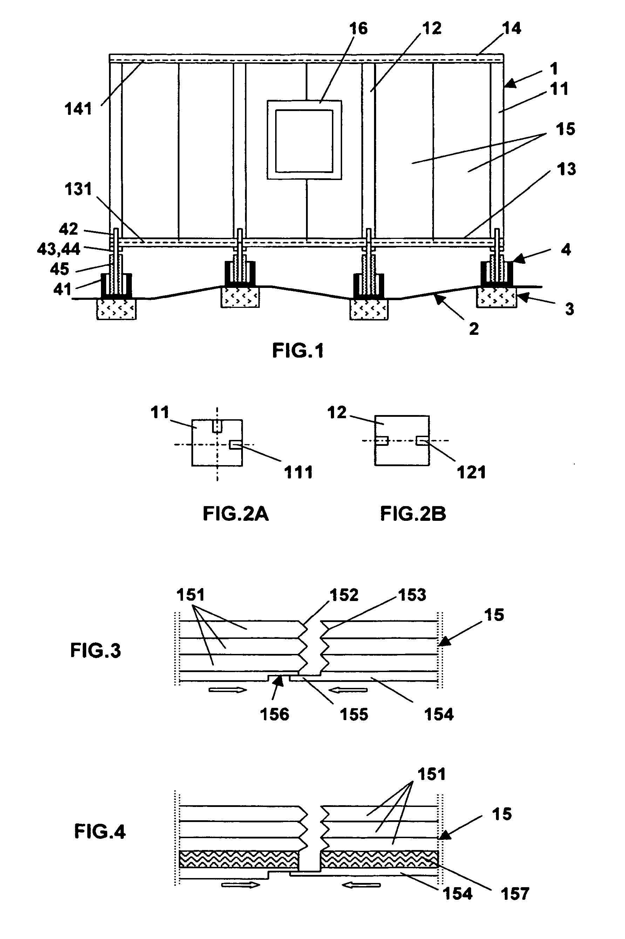

- la figure 1 est une vue générale frontale d'une construction en bois selon l'invention reposant sur des moyens de rattrapage de niveau fixés sur des plots de fondation ;
- les figures 2A et 2B représentent respectivement, en coupe, un poteau d'angle et un poteau intermédiaire ;
- la figure 3 représente, en coupe transversale, un élément de panneau standard;
- la figure 4 représente, en coupe transversale, un élément de panneau selon la figure 3 comportant un module isolant ;

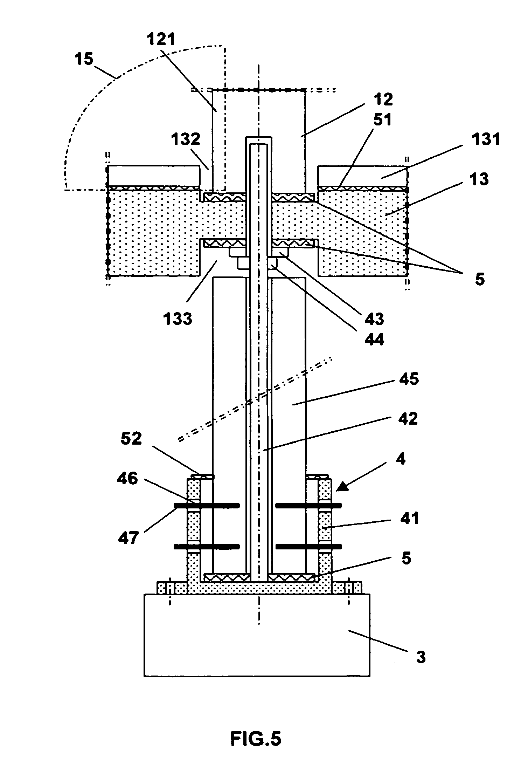

- la figure 5 représente, en coupe longitudinale, une vue de détail du moyen de rattrapage de niveau agencé entre le socle de fondation et à la base de la construction ;

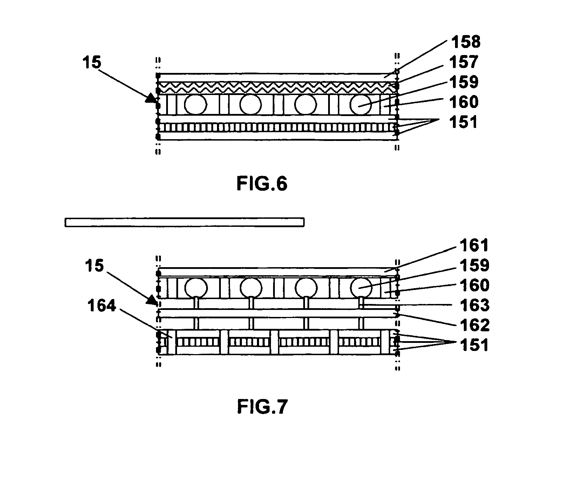

- la figure 6 représente, en coupe transversale, un élément de panneau chauffant ;
- la figure 7 représente, en coupe transversale, un élément de panneau récupérateur d'énergie solaire.

### DESCRIPTION DETAILLEE DE L'INVENTION

L'ensemble représenté aux figures concerne une construction (1) à usage d'habitation, de bureau ou industriel, destinée à être installée sur un terrain (2) à niveaux variables comprenant des moyens (4), aptes à rattraper les différences de niveaux, reposant sur des plots de fondation (3).

Ladite construction (1) est en bois et est du type constituée de poteaux d'angles (11) et intermédiaires (12), de poutres inférieures (13) et supérieures (14) et d'éléments de panneaux (15) maintenus par lesdits poteaux et lesdites poutres et susceptibles de contenir des ouvertures (16) pour portes ou fenêtres.

Les moyens de rattrapage de niveaux (4) sont constitués, chacun :
- d'une boîte métallique (41), ouverte en partie supérieure, destinée à être fixée ou scellée sur chaque plot (3) à la verticale de chaque poteau d'angle (11) et intermédiaire (12) ;
- d'une tige filetée métallique (42), fixée centrée dans le fond de ladite boîte, traversant la poutre inférieure (13) correspondante et pénétrant dans une cavité aménagée à la base du poteau (11,12) correspondant ;
- d'une plaque métallique (43), associée à un écrou (44) en prise avec la tige filetée (42), plaquée sous la poutre inférieure (13) correspondante, destinée à soutenir la construction et à permettre un réglage fin de rattrapage final de niveau.

Chaque de élément de boîte (41), de tige filetée (42), de plaque (43) et d'écrou (44), est dimensionné en fonction des caractéristiques mécaniques et dimensionnelles de la construction et des différences de niveau existant entre les divers plots de fondation (3).

Chaque boîte métallique (41) comporte un élément de poutre en bois (45), traversé par la tige filetée (42), reposant sur une membrane souple étanche (5) placée dans le fond de celle-ci et des trous latéraux (46) destinés au passage de tiges (47) (traversantes ou non) aptes à maintenir ledit élément de poutre par rapport à la boîte (41). La membrane (5) peut être aux normes antisismiques.

La boîte (41) peut comporter une embase inclinée supporter des poutres inclinées.

Chaque poutre inférieure (13) comporte, outre les rainures longitudinales (131) dans lesquelles les éléments de panneaux (15) s'emboîtent, des encoches transversales (132) et (133) au fond desquelles s'appuient respectivement, la base des poteaux (11,12) correspondants et les plaques métalliques (43) par l'intermédiaire de membranes souples étanches (5) placées dans le fond desdites encoches (132,133).

Les poteaux d'angles (11) et intermédiaires (12) comportent des rainures longitudinales (111) et (121) aptes à loger les bords verticaux de deux éléments de panneaux adjacents (15).

Les poutres inférieures (13) et supérieures (14) comportent des rainures longitudinales (131) et (141) aptes à loger les bords horizontaux des éléments de panneaux (15). Elles comportent également dans leur fond, des joints souples étanches (51).

L'espace existant entre le dessus de la boîte (41) et la poutre (45) est obturé par un joint d'étanchéité (52).

Un élément de panneau (15), standard, peut être réalisé par la superposition d'un premier module constitué d'au moins trois lames croisées (151) possédant des parois latérales pourvues d'angles saillants (152) ou rentrants (153) et d'un deuxième module constitué d'un panneau (154) pourvu, d'un côté, d'une bande sortante (155) et, de l'autre côté, d'une encoche (156) apte à loger la bande sortante (155) du panneau adjacent complémentaire. Un élément isolant (157) peut être inséré entre les lames croisées (151) et l'élément de panneau (154).

Un élément de panneau (15), chauffant, peut être réalisé par la juxtaposition des modules successifs suivants :
- un parement extérieur (158) ;
- un élément isolant (157) ;
- des canalisations (159) destinées au chauffage par air, eau ou conducteur électrique et de liteaux (160) dégageant des espaces destinés au passage des gaines techniques ;
- au moins trois lames croisées superposées (151).

Un élément de panneau (15), récupérateur d'énergie solaire, peut être réalisé par la juxtaposition des modules successifs suivants:
- un capteur extérieur (161) d'énergie solaire ;
- des canalisations (159) destinées à la récupération, par fluide caloporteur, de l'énergie solaire récupérée et des liteaux (160) dégageant des espaces destinés au passage des gaines techniques ;
- un accumulateur (162) d'énergie thermique maintenu entre des liteaux (163) ;
- au moins trois lames croisées superposées (151) pourvue de trous (164) pour le passage de l'air chauffé vers l'intérieur de l'habitation.

La construction selon l'invention peut comporter plusieurs niveaux. Elle peut également servir à rehausser des niveaux existants.

Bien entendu, l'homme de métier sera apte à réaliser l'invention telle que décrite et représentée en appliquant et en adaptant des moyens connus sans qu'il soit nécessaire de les décrire ou de les représenter.

Il pourra également prévoir d'autres variantes sans pour cela sortir du cadre de l'invention qui est déterminé par la teneur des revendications.

## Revendications

1. Construction en bois (1) à usage d'habitation, de bureau ou industriel, destinée à être installée sur un terrain (2) à niveaux variables, comprenant des moyens (4), aptes à rattraper les différences de niveaux, reposant sur des plots de fondation (3) ; ladite construction étant du type constituée de poteaux d'angles (11) et intermédiaires (12), de poutres inférieures (13) et supérieures (14) et d'éléments de panneaux (15) maintenus par lesdits poteaux et lesdites poutres ;
**caractérisée en ce que** les moyens de rattrapage de niveaux (4) sont constitués, chacun :
- d'une boîte métallique (41), ouverte en partie supérieure, destinée à être fixée sur chaque plot (3) à la verticale de chaque poteau d'angle (11) et intermédiaire (12) ;
- d'une tige filetée métallique (42), fixée centrée dans le fond de ladite boîte, traversant la poutre inférieure (13) correspondante et pénétrant dans une cavité aménagée à la base du poteau (11,12) correspondant ;
- d'une plaque métallique (43), associée à un écrou (44) en prise avec la tige filetée (42), plaquée sous la poutre inférieure (13) correspondante, destinée à soutenir la construction et à permettre un réglage fin de rattrapage final de niveau ;
et **en ce que** chacun de éléments de boîte (41), de tige filetée (42), de plaque (43) et d'écrou (44) sont dimensionnés en fonction des caractéristiques mécaniques et dimensionnelles de la construction et des différences de niveau existant entre les divers plots de fondation (3).

2. Construction, selon la revendication 1, **caractérisée en ce que** chaque boîte métallique (41) comporte un élément de poutre en bois (45), traversé par la tige filetée (42), reposant sur une membrane souple étanche (5) placée dans le fond de celle-ci et des trous latéraux (46) destinés au passage de tiges (47) aptes à maintenir ledit élément de poutre par rapport à la boîte (41).

3. Construction, selon la revendication 1, **caractérisée en ce que** chaque poutre inférieure (13) comporte, outre les rainures longitudinales (131) dans lesquelles les éléments de panneaux (15) s'emboîtent, des encoches transversales (132) et (133) au fond desquelles s'appuient respectivement, la base des poteaux (11,12) correspondants et les plaques métalliques (43) par l'intermédiaire de membranes souples étanches (5) placées dans le fond desdites encoches (132,133).

4. Construction, selon la revendication 1, **caractérisée en ce que** les poteaux d'angles (11) et intermédiaires (12) comportent des rainures longitudinales (111) et (121) aptes à loger les bords verticaux de deux éléments de panneaux (15) adjacents.

5. Construction, selon la revendication 1, **caractérisée en ce que** les poutres inférieures (13) et supérieures (14) comportent des rainures longitudinales (131) et (141) aptes à loger les bords horizontaux des éléments de panneaux (15).

6. Construction, selon la revendication 1 , **caractérisée en ce qu'**un élément de panneau (15), standard, est réalisé par la superposition d'un premier module constitué d'au moins trois lames croisées (151) possédant des parois latérales pourvues d'angles saillants (152) ou rentrants (153) et d'un deuxième module constitué d'un panneau (154) pourvu, d'un côté, d'une bande sortante (155) et, de l'autre côté, d'une encoche (156) apte à loger la bande sortante (155) du panneau adjacent complémentaire.

7. Construction, selon la revendication 6, **caractérisée en ce qu'**un élément isolant (157) est inséré entre les lames croisées (151) et l'élément de panneau (154).

8. Construction, selon la revendication 1, **caractérisée en ce qu'**un élément de panneau (15), chauffant, est réalisé par la juxtaposition des modules successifs suivants :
- un parement extérieur (158);
- un élément isolant (157) ;
- des canalisations (159) destinées au chauffage par air, eau ou conducteur électrique et de liteaux (160) dégageant des espaces destinés au passage des gaines techniques ;
- au moins trois lames croisées superposées (151).

9. Construction, selon la revendication 1, **caractérisée en ce qu'**un élément de panneau (15), récupérateur d'énergie solaire, est réalisé par la juxtaposition des modules successifs suivants :
- un capteur extérieur (161) d'énergie solaire;
- des canalisations (159) destinées à la récupération, par fluide caloporteur, de l'énergie solaire récupérée et des liteaux (160) dégageant des espaces destinés au passage des gaines techniques ;
- un accumulateur (162) d'énergie thermique maintenu entre des liteaux (163) ;
- au moins trois lames croisées superposées (151) pourvue de trous (164) pour le passage de l'air chauffé vers l'intérieur de l'habitation.

## Claims

1. Wooden building (1) for housing, office or industrial use, intended to be installed on a plot (2) with variable levels, comprising means (4), able to correct differences in level, resting on foundation studs (3); said building being of the type comprised of angle posts (11) and intermediary posts (12), of lower beams (13) and upper beams (14) and of panel elements (15) maintained by said posts and said beams;
**characterised in that** the levelling means (4) are each comprised:
- of a metal box (41), open in the upper portion, intended to be fixed onto each stud (3) vertically to each angle post (11) and intermediary post (12);
- of a metal threaded rod (42), fixed centred in the bottom of said box, passing through the corresponding lower beam (13) and penetrating into a cavity made at the base of the corresponding post (11,12);
- of a metal plate (43), associated with a nut (44) engaged with the threaded rod (42), thrust under the corresponding lower beam (13), intended to support the building and allow for a fine adjustment in the final levelling;
and **in that** each of the box (41), threaded rod (42), plate (43) and nut (44) elements are dimensioned according to the mechanical and dimensional characteristics of the building and of the differences in level that exist between the various foundation studs (3).

2. Building, according to claim 1, **characterised in that** each metal box (41) comprises a wooden beam element (45), passed through by the threaded rod (42), resting on a sealed flexible membrane (5) placed in the bottom of the latter and lateral holes (46) intended for the passing of rods (47) able to maintain said beam element in relation the box (41).

3. Building, according to claim 1, **characterised in that** each lower beam (13) comprises, in addition to the longitudinal grooves (131) wherein the panel elements (15) are nested, transversal notches (132) and (133) at the bottom of which respectively press, the base of the corresponding posts (11,12) and the metal plates (43) by the intermediary of sealed flexible membranes (5) placed in the bottom of said notches (132,133).

4. Building, according to claim 1, **characterised in that** the angle posts (11) and intermediary posts (12) comprise longitudinal grooves (111) and (121) able to house the vertical edges of two adjacent panel elements (15).

5. Building, according to claim 1, **characterised in that** the lower beams (13) and upper beams (14) comprise longitudinal grooves (131) and (141) able to house the horizontal edges of the panel elements (15).

6. Building, according to claim 1, **characterised in that** a panel element (15), standard, is carried out through the superimposing of a first module constituted of at least three cross blades (151) having lateral walls provided with protruding angles (152) or re-entrant angles (153) and a second module constituted of a panel (154) provided, on one side, with an exiting strip (155) and, on the other side, with a notch (156) able to house the exiting strip (155) of the additional adjacent panel.

7. Building, according to claim 6, **characterised in that** an insulating element (157) is inserted between the cross blades (151) and the panel element (154).

8. Building, according to claim 1, **characterised in that** a panel element (15), heating, is carried out by juxtaposing the following successive modules:
- an exterior cladding (158);
- an insulating element (157);
- conduits (159) intended for heating by air, water or electrical conductor and battens (160) releasing spaces intended for the passing of service shafts;
- at least three superimposed cross blades (151).

9. Building, according to claim 1, **characterised in that** a panel element (15), a solar energy collector, is carried out by juxtaposing the following successive modules:
- an exterior solar energy receiver (161);
- conduits (159) intended for the collection, via a heat transfer fluid, of the solar energy recovered and of the battens (160) releasing spaces intended for the passing of service shafts;
- an accumulator (162) of thermal energy maintained between two battens (163);
- at least three superimposed cross blades (151) provided with holes (164) for the passing of the heated air to the interior of the housing.

## Patentansprüche

1. Konstruktion aus Holz (1) zu Wohn-, Büroraum- oder Industriezwecken, dazu vorgesehen auf einem Grundstück (2) mit verschiedenen Ebenen installiert zu werden, umfassend Mittel (4), die dazu geeignet sind, die Unterschiede von Ebenen auszugleichen, und die sich auf Fundamentklötze (3) stützt; wobei die Konstruktion des Typs mit Eck- (11) und Zwischenpfosten (12), unteren (13) und oberen (14) Balken und Tafelelementen (15), die von den Pfosten und Balken getragen werden, ist;
**dadurch gekennzeichnet, dass** die Mittel zum Ausgleichen der Ebenen (4) sich jeweils wie folgt zusammen setzen:
- ein Metallkasten (41), der im oberen Bereich offen ist, der dazu vorgesehen ist, an jedem Klotz (3) an der Senkrechten von jedem Eck- (11) und Zwischenpfosten (12) befestigt zu werden;
- ein Metallgewindestift (42), der im Boden des Kastens zentriert befestigt ist, den entsprechenden unteren Balken (13) durchquert und in einen Hohlraum eindringt, der an der Basis des entsprechenden Pfosten (11, 12) vorgesehen ist;
- eine Metallplatte (43), die einer Mutter (44), die im Eingriff mit dem Gewindestift (42) ist, zugeordnet ist, und unter dem entsprechenden unteren Balken (13) angedrückt ist, und die dazu vorgesehen ist, die Konstruktion zu stützen und eine feine Angleichung für den Endausgleich der Ebenen zu erlauben;
und **dadurch** dass jedes Element vom Kasten (41), vom Gewindestift (42), von der Platte (43) und von der Mutter (44) in Abhängigkeit von den mechanischen und dimensionalen Eigenschaften der Konstruktion und der Ebenenunterschiede, die zwischen den verschiedenen Fundamentklötzen (3) existieren, dimensioniert ist.

2. Konstruktion nach Anspruch 1, **dadurch gekennzeichnet, dass** jeder Metallkasten (41) ein Balkenelement aus Holz (45) umfasst, das vom Gewindestift (42) durchquert wird, das sich auf eine wasserdichte flexible Membran (5) stützt, die in dessen Boden angebracht ist, sowie Seitenlöcher (46) für den Durchgang von Stiften (47), die dazu geeignet sind das Balkenelement im Verhältnis zum Kasten (41) zu halten.

3. Konstruktion nach Anspruch 1, **dadurch gekennzeichnet, dass** jeder untere Balken (13) neben den Längsnuten (131), in die die Tafelelemente (15) eingreifen, Querkerben (132) und (133) umfasst, auf deren Boden sich jeweils die Basen der entsprechenden Pfosten (11, 12) und die Metallplatten (43) stützen, und dies durch wasserdichte flexible Membranen (5), die im Boden der Kerben (132,133) angeordnet sind.

4. Konstruktion nach Anspruch 1, **dadurch gekennzeichnet, dass** die Eck- (11) und Zwischenpfosten (12) Längsnuten (111) und (121) umfassen, die dazu geeignet sind, die senkrechten Ränder von zwei nebeneinander liegenden Tafelelementen (15) aufzunehmen.

5. Konstruktion nach Anspruch 1, **dadurch gekennzeichnet, dass** die unteren und (13) und oberen Balken (14) Längsnuten (131) und (141) umfassen, die dazu geeignet sind, die horizontalen Ränder der Tafelelemente (15) aufzunehmen.

6. Konstruktion nach Anspruch 1 , **dadurch gekennzeichnet, dass** ein standardmäßiges Tafelelement (15) realisiert wird durch die Überlagerung eines ersten Moduls, gebildet aus zumindest drei gekreuzten Blättern (151) mit Seitenwänden, die mit vorspringenden (152) oder zurückspringenden (153) Ecken versehen sind, und eines zweiten Moduls, gebildet aus einer Tafel (154) versehen einerseits mit einem austretenden Band (155) und andererseits mit einer Kerbe (156), die in der Lage ist das austretende Band (155) der zusätzlichen benachbarten Tafel aufzunehmen.

7. Konstruktion nach Anspruch 6, **dadurch gekennzeichnet, dass** ein isolierendes Element (157) zwischen den gekreuzten Blättern (151) und dem Tafelelement (154) eingefügt ist.

8. Konstruktion nach Anspruch 1, **dadurch gekennzeichnet, dass** ein heizendes Tafelelement (15) durch das Zusammenfügen folgender aufeinander folgender Module realisiert wird:
- eine Außenseite (158);
- ein isolierendes Element (157);
- Rohrleitungen (159), die vorgesehen sind zum Heizen durch Luft, Wasser oder elektrischen Leiter und Leisten (160), die Platz für den Durchgang der Leitungstunnel frei geben;
- zumindest drei überlagerte gekreuzte Blätter (151).

9. Konstruktion nach Anspruch 1, **dadurch gekennzeichnet, dass** ein Tafelelement (15), das Sonnenenergie rück gewinnt, durch das Zusammenfügen folgender aufeinander folgender Module realisiert wird:
- ein äußerer Sonnenenergiesensor (161);
- Rohrleitungen (159), die vorgesehen sind zur Rückgewinnung per Wärmeträger von der rück gewonnen Sonnenenergie, und Leisten (160), die Platz für den Durchgang der Leitungstunnel frei geben;
- ein Wärmeenergiespeicher (162), der zwischen Leisten (163) gehalten wird;
- zumindest drei überlagerte gekreuzte Blätter (151) mit Öffnungen (164) für den Durchlauf der erwärmten Luft in die Wohnung eindringen.
